# EUROPEAN PATENT APPLICATION

(11) **EP 3 093 579 A1**
(43) Date of publication of application: **16.11.2016**
(21) Application number: 16168903.9
(22) Date of filing: 10.05.2016
(51) Int. Cl.: F24H 9/00, F24H 9/12, F24H 1/26, F24H 1/44, F24H 1/28

(54) **CONDENSING BOILER**

(30) Priority: 12.05.2015 IT VR20150081
(71) Applicant: I.C.I. CALDAIE S.p.A., 37059 Zevio, Frazione Campagnola (VR) (IT)
(72) Inventor: PISANI, Giovanni, 37142 VERONA (IT)
(74) Representative: Modiano, Micaela Nadia

(57) **Abstract**

A condensing boiler, which comprises an outer enclosure (2), which defines a chamber (3) for containing the water to be heated and accommodates a combustion chamber (7) which is connected to a plurality of heat exchange tubes (12) which lead into a fume collection chamber (13) which is connected to a fume evacuation stack (17); a condensing device (18) for the fumes is arranged in the fume collection chamber (13); according to the invention, the stack (17) has an intake (17a) which is arranged substantially coaxially to the fume collection chamber (13) and the condensing device (18) comprises at least one fume cooling element (19) which has a substantially annular shape and is arranged substantially coaxially to the fume collection chamber (13).

## Description

The present invention relates to a condensing boiler.

Nowadays in household heating systems and systems for producing household hot water, "condensing" boilers are widespread. In these boilers the fumes produced by combustion are cooled until at least a part of the water vapor contained therein condenses, with consequent transfer to the water from the fumes not only of sensible heat but also of latent heat of condensation.

Typically, condensing boilers have an outer enclosure that defines a chamber containing the water to be heated and which accommodates internally a burner constituted by a combustion chamber associated with a burner and connected to a plurality of fume tubes, which exchange heat with the water to be heated, in order to allow the transmission of sensible heat and latent heat from the fumes to the water, and which lead into a fume collection chamber connected to a stack.

In order to seek to obtain higher yields, within the fume collection chamber there can be a condensing device, usually constituted by a coil, inside which water passes through and outside which the fumes flow over, the function of which is to also recover the latent heat from any residual water vapor in the fumes exiting from the fume tubes.

Although conventional condensing devices make a positive contribution to increasing the level di efficiency of condensing boilers, they have not, however, been found to be fully satisfactory in exchanging heat between water and fumes.

In particular, current condensing devices have a high space occupation but a relatively small heat exchange surface.

The aim of the present invention is to provide a condensing boiler that is capable of reaching high yield levels by way of recovering most of the latent heat available in the combustion fumes.

Within this aim another object of the present invention is to provide a condensing boiler that has a condensing device which for the same space occupation with respect to conventional condensing devices has a greater heat exchange surface.

Another object of the present invention is to provide a condensing boiler that is simple to provide in terms of construction, so that it can be competitive from a merely economic viewpoint as well.

This aim and these and other objects which will become better apparent hereinafter are achieved by a condensing boiler, according to the invention, as defined in appended claim 1.

Further characteristics and advantages of the invention will become better apparent from the description of a preferred, but not exclusive, embodiment of the condensing boiler, according to the invention, which is illustrated by way of non-limiting example in the accompanying drawings wherein:

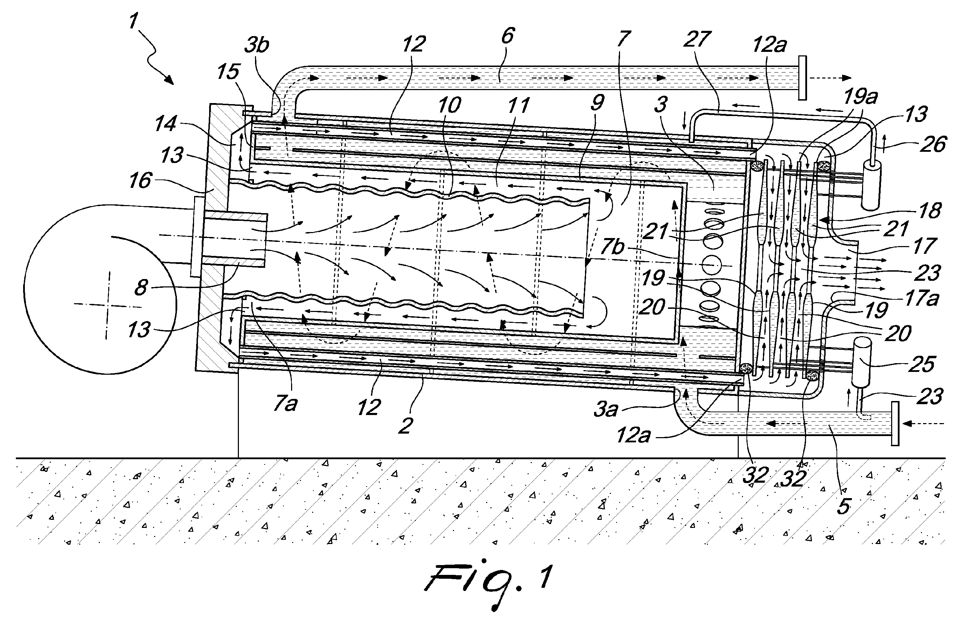

Figure 1 is a longitudinal cross-sectional view of a condensing boiler according to the invention;

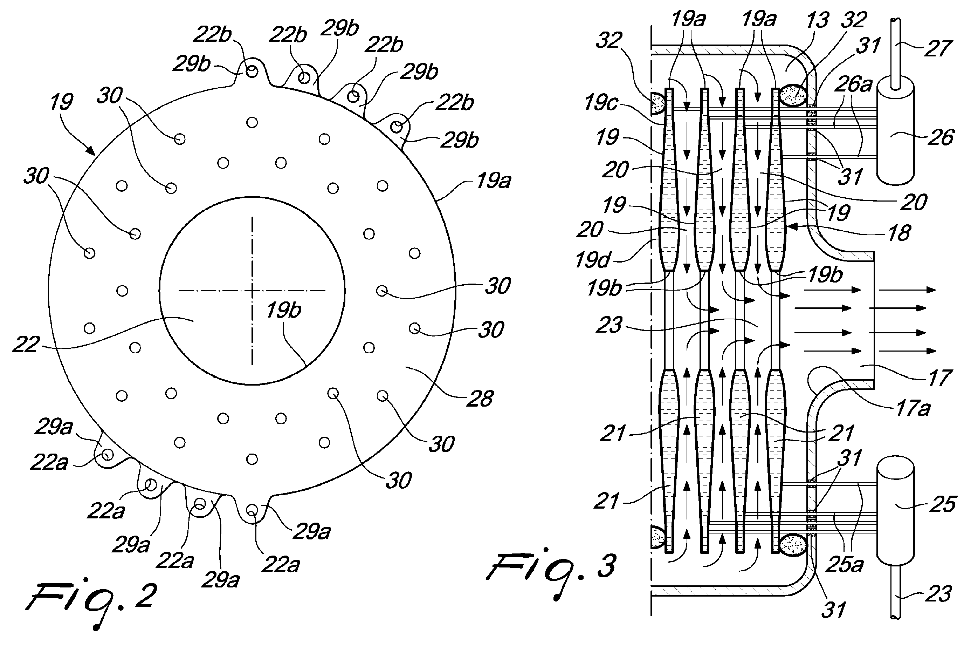

Figure 2 is a schematic front elevation view of a condensing device present in the boiler according to the invention;
Figure 3 is an enlarged longitudinal cross-sectional view of a portion of the boiler according to the invention.

With reference to the figures, a condensing boiler, according to the invention, generally indicated with the reference numeral 1, comprises an outer enclosure 2, for example substantially cylindrical, inside which is defined a chamber 3 for containing the water to be heated.

In particular, the containment chamber 3 is provided with an inlet 3a, which can be connected to a duct 5 for the return of cold water, originating for example from a heating system or from the water mains, and an outlet 3b, which can be connected to a duct 6 for the delivery of hot water, which arrives, for example, in the heating system or in the household water system.

Also accommodated inside the outer enclosure 2 is a combustion chamber 7, which is associated with a burner 8.

The combustion chamber 7 is, for example, delimited laterally by a cylindrical wall 9, which separates it from the chamber 3 containing the water to be heated, and is, conveniently, positioned substantially coaxially to the outer enclosure 2.

The burner 8 is, conveniently, arranged at one longitudinal end 7a of the combustion chamber 7, which, at its opposite end, is closed by a deflection wall 7b which deflects the fumes produced by the flame generated by the burner 8, so as to make them turn toward the end 7a of the combustion chamber where the burner 8 is located.

Inside the combustion chamber 7 there can conveniently be a tubular element 10, positioned substantially coaxial to the burner 8, which laterally confines the flame produced by the burner 8 and defines, with the cylindrical wall 9, an annular interspace 11, into which the fumes redirected by the deflection wall 7b are channeled and directed toward the end 7a of the combustion chamber 7.

The tubular element 10 can, advantageously, have a corrugated shape structure in order to increase the turbulence of the fumes.

The combustion chamber 7 is connected to a plurality of heat exchange tubes 12, which pass through the containment chamber 3 and lead, with an outlet end 12a thereof, into a fume collection chamber 13, which is, conveniently, arranged, with respect to the chamber 3 for containing the water to be heated, at the opposite end to the burner 8. While the fumes flow over the heat exchange tubes 12 they transfer sensible heat and part of the latent heat to the water present in the containment chamber 3.

As illustrated, at its end 7a, the combustion chamber 7 has, for example, one or more ports 13 which are connected with a fume redirection chamber 14, which channels the fumes into the heat exchange tubes 12 and is defined, substantially, between a delimiting end wall 15 of the chamber 3 containing the water to be heated and a door 16, which is passed through, axially, by the burner 8 and can be opened in order to allow inspection of the combustion chamber.

Conveniently, the collection chamber 13 for the fumes originating from the heat exchange tubes 12 is substantially cylindrical and is connected to a stack 17 for evacuating the fumes to outside the boiler.

In particular, arranged inside the fume collection chamber 13 is a condensing device 18 for the fumes arriving in the fume collection chamber 13, which makes it possible to recover any residual latent heat in the fumes before they exit into the atmosphere through the stack 17.

According to the invention, the stack 17 is provided with an intake 17a which is arranged substantially coaxially to the fume collection chamber 13.

Also according to the invention, the condensing device 18 comprises at least one fume cooling element 19 which is substantially annular and is arranged substantially coaxially to the fume collection chamber 13 in order to be skimmed radially, on its outer surface, by a flow of fumes that arrive from the heat exchange tubes 12 and are directed toward the intake 17a of the stack 17.

More specifically, as illustrated, the (or each) cooling element 19 is substantially a self-contained closed loop and, more precisely, substantially toroidal or "doughnut" shaped with its axis arranged substantially coaxially to the axis of the fume collection chamber 13.

Preferably, the condensing device 18 has a plurality of cooling elements 19 which are arranged so as to face each other and are substantially mutually coaxial, so as to define, between the cooling elements 19, a plurality of regions 20 for channeling the fumes each one of which is intended to be crossed radially by a flow of the fumes that is directed from the outer perimetric edge 19a of the cooling elements 19 toward the axis of the fume collection chamber 13.

In more detail, defined inside each cooling element 19 is a flow cavity 21 for a heat exchange fluid, which makes it possible to exchange heat with the fumes that brush against the cooling elements 19 so as to recover at least some of the residual latent heat.

In particular, each cooling element 19 has, conveniently in the lower part thereof, at least one intake port 22a which is connected with its flow cavity 21 and is connected, by way of a bypass duct 23, to the cold water return duct 5 and, in the upper part thereof, at least one outlet port 22b, which is connected to the containment chamber 3, in order to enable the water that has entered the flow cavity 21 of the cooling elements 19 and been heated by the combustion fumes arrived in the fume collection chamber 13 to reach, in turn, through the containment chamber 3, the hot water delivery duct 6.

Advantageously, the outlet ends 12a of the heat exchange tubes 12 are distributed around the axis of the fume collection chamber 13 along a circumference and the outer perimetric edge 19a of the cooling elements 19 has a smaller diameter than the circumference along which the outlet ends 12a of the heat exchange tubes 12 are distributed, so as to ensure the radial flow of the fumes from the heat exchange tubes 12 to the stack 17 through the channeling regions 20 defined between the cooling elements 19.

Conveniently, the cooling elements 19 define axially a channel 23 for merging the flows of the fumes that pass through the channeling regions 20, which is facing the intake 17a of the stack 17 and laterally delimited by the inner perimetric edges of the cooling elements 19.

As illustrated, each one of the cooling elements 19 is connected, with its intake port 22a, to an intake manifold 25, by way of a respective intake duct 25a, and, with its outlet port 22b, to an outlet manifold 26, by way of a respective discharge duct 26a.

In particular, the intake manifold 25 is connected to the bypass duct 23, while the outlet manifold 26 is connected to a connecting duct 27 which leads into the containment chamber 3.

Conveniently, the intake ducts 25a and the discharge ducts 26a pass through a wall of the fume collection chamber 13, passing through adapted openings in which there are, advantageously, sealing gaskets 31 which prevent the egress of the fumes from such collection chamber.

Conveniently, inside the fume collection chamber 13 there can be, between the set of cooling elements 19 and the walls arranged at the axial ends of the fume collection chamber 13, two circular gaskets 32 which prevent the fumes from flowing directly toward the stack 17 without passing through the channeling regions 20 defined between pairs of cooling elements 19.

Advantageously, the cooling elements 19 have, in the axial direction, a substantially flattened shape structure.

More specifically, the cooling elements 19 have, conveniently, a narrowed portion 19c proximate to their outer perimetric edge 19a and an enlarged portion 19d proximate to the corresponding inner perimetric edge 19b, so as to create a variation in the passage cross-section of the channeling regions 20 that produces a variation in speed of the radial flows of fumes that pass through them, with an increase in the turbulence and, therefore, in the heat exchange coefficient of the fumes.

For completeness, it should be noted that the cooling elements 19 can be, advantageously, made from a respective pair of annular and mutually facing plates 28.

Each one of the plates 28 has, at points that are mutually diametrically opposite, tabs 29a and 29b, which protrude from the outer perimetric edge.

In the tabs 29a and 29b of one of the two plates that make up each cooling element 19, the intake port 22a and the outlet port 22b of the cooling elements 19 are respectively provided.

In order to provide each cooling element 19, the respective plates 28 are first mutually welded at their inner and outer perimetric edges, at the edges of their tabs 29a and 29b and in localized points 30 of their surface and, subsequently, they are deformed by inflation by way of a pressurized gas that is blown into the space present between the plates 28 through the intake ports 22a and/or the outlet ports 22b, which were previously provided.

Operation of the condensing boiler according to the invention is the following.

The cold water originating from the return duct 5 enters the containment chamber 3 through the inlet 3 a.

The burner 8 generates a flame that extends inside the tubular element 10, producing combustion fumes that flow through the combustion chamber until they reach the deflection wall 17b, which redirects them and channels them along the annular interspace 11, so that they can begin to exchange heat with the water present in the containment chamber 3.

Once the fumes have flowed through the annular interspace 11 they enter, through the connection ports 13, the fume redirection chamber 14 which directs them into the heat exchange tubes 12.

While the combustion fumes flow over the heat exchange tubes 12, they transfer not only sensible heat but also some of the latent heat to the water contained in the containment chamber 3.

The water thus heated exits the containment chamber 3 from the outlet 3b and enters the delivery duct 6.

When the combustion fumes reach the end of outlet 12a of the heat exchange tubes 12, they enter the fume collection chamber 13 and encounter the cooling elements 19.

The flow cavity 21 defined inside the cooling elements 19 receives, through the corresponding intake duct 25a connected to its intake port 22a, cold water originating from the return duct 5, by way of the bypass duct 23 and the intake manifold 25.

In order to reach the stack 17, the combustion fumes that exit from the heat exchange tubes 12 are channeled into the channeling regions 20 defined between the cooling elements 19.

By radially flowing through the channeling regions 20 from the outer perimetric edge 19a of the cooling elements 19 toward the axis of the fume collection chamber 13, the combustion fumes transfer any residual latent heat to the water that is flowing inside the flow cavity 21 of the cooling elements 19.

After flowing through the channeling regions 20, the fumes enter the merging channel 23, through which they reach the intake 17a of the stack 17, so that they can be evacuated into the atmosphere.

The water that flows through the flow cavity 21 of the cooling elements 19 and which is heated by the residual latent heat transferred from the combustion fumes exits from the cooling elements 19 through the relative outlet ports 22b and reaches, by way of the discharge ducts 26a, the outlet manifold 26, from which it is sent, by way of connecting duct 27, into the containment chamber 3, so as to be reunited with the water fed by the return duct 5.

In practice it has been found that the invention is capable of fully achieving the set aim in that the peculiar condensing device according to the invention with which the boiler is provided enables a high recovery of the latent heat of the fumes with perceptible increase in the yield of the boiler.

All the characteristics of the invention, indicated above as advantageous, convenient or similar, may also be missing or be substituted by equivalent characteristics.

The individual characteristics set out in reference to general teachings or to specific embodiments may all be present in other embodiments or may substitute characteristics in such embodiments.

The invention, thus conceived, is susceptible of numerous modifications and variations, all of which are within the scope of the appended claims.

In practice the materials employed, provided they are compatible with the specific use, and the dimensions and shapes, may be any according to requirements.

Moreover, all the details may be substituted by other, technically equivalent elements.

The disclosures in Italian Patent Application No. VR2015A000081 (102015902350753) from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A condensing boiler comprising an outer enclosure (2) defining internally a chamber (3) for containing the water to be heated, which is provided with an inlet (3a) which can be connected to a duct (5) for the return of cold water and with an outlet (3b) which can be connected to a duct (6) for the delivery of hot water, and accommodating internally a combustion chamber (7), which is associated with a burner (8) and is connected to a plurality of heat exchange tubes (12) which pass through said containment chamber (3) and lead, with an outlet end (12a) thereof, into a fume collection chamber (13), which is substantially cylindrical and is connected to a fume evacuation stack (17), inside said fume collection chamber (13) there being a condensing device (18) for the fumes that arrive in said fume collection chamber (13), **characterized in that** said stack (17) has an intake (17a) which is arranged substantially coaxially to said fume collection chamber (13) and **in that** said condensing device (18) comprises at least one fume cooling element (19) which has a substantially annular shape and is arranged substantially coaxially to said fume collection chamber (13) in order to be skimmed radially on its outer surface by a flow of the fumes that arrive from said heat exchange tubes (12) and are directed toward the intake (17a) of said stack (17).

2. The boiler according to claim 1, **characterized in that** said at least one cooling element (19) is provided internally with a flow cavity (21) for a heat exchange fluid.

3. The boiler according to one or more of the preceding claims, **characterized in that** said at least one cooling element (19) has at least one intake port (22a) which is connected, by way of a bypass duct (23), to said cold water return duct (5), and at least one outlet port (22b) which is connected to said containment chamber (3).

4. The boiler according to one or more of the preceding claims, **characterized in that** the outlet ends (12a) of said heat exchange tubes (12) are distributed around the axis of said fume collection chamber (13) along a circumference, said at least one cooling element (19) having an outer perimetric edge (19a) which has a smaller diameter than said circumference.

5. The boiler according to one or more of the preceding claims, **characterized in that** said condensing device (18) has a plurality of cooling elements (19) which are arranged so as to face each other and are substantially mutually coaxial, so as to define, between said cooling elements (19), a plurality of regions (20) for channeling the fumes each one of which is intended to be crossed radially by a flow of the fumes that is directed from the outer perimetric edge (19a) of said cooling elements (19) toward the axis of said fume collection chamber (13).

6. The boiler according to one or more of the preceding claims, **characterized in that** said cooling elements (19) define axially a channel (23) for merging the flows of the fumes that pass through said channeling regions (20).

7. The boiler according to one or more of the preceding claims, **characterized in that** each one of said cooling elements (19) is connected, with its intake port (22a), to an intake manifold (25) by way of a respective intake duct (25a), and by way of its outlet port (22b) to an outlet manifold (26), by way of a respective discharge duct (26a), said intake manifold (25) being connected to said bypass duct (23) and said outlet manifold (26) by way of a connecting duct (27) which leads into said containment chamber (3).

8. The boiler according to one or more of the preceding claims, **characterized in that** said cooling elements (19) have a narrowed portion (19c) proximate to their outer perimetric edge (19a) and an enlarged portion (19d) proximate to the corresponding inner perimetric edge (19b).

9. The boiler according to one or more of the preceding claims, **characterized in that** said fume collection chamber is arranged, with respect to said containment chamber (3), on the opposite side with respect to said burner (8).

10. The boiler according to one or more of the preceding claims, **characterized in that** it comprises circular gaskets (32) which act between said cooling elements (19) and the walls arranged at the axial ends of said fume collection chamber (13), in order to prevent the fumes from flowing directly toward the stack (17) without passing through said channeling regions (20).
